Europäisches Patentamt

European Patent Office

Office européen des brevets

(11) Veröffentlichungsnummer: **0 325 752 B1**

## (12) EUROPÄISCHE PATENTSCHRIFT

(45) Veröffentlichungstag der Patentschrift: **12.01.94**

(21) Anmeldenummer: **88120802.9**

(22) Anmeldetag: **13.12.88**

(51) Int. Cl.5: **B01D 67/00**, B01D 69/00,
B01D 71/02, B01D 71/04,
B01D 71/06, B23K 26/00

(54) **Mikro/Ultrafiltrationsmembranen mit definierter Porengrösse und Verfahren zu deren Herstellung durch Bestrahlung mit gepulsten Lasern.**

(30) Priorität: **17.12.87 DE 3742770**

(43) Veröffentlichungstag der Anmeldung:
**02.08.89 Patentblatt 89/31**

(45) Bekanntmachung des Hinweises auf die
Patenterteilung:
**12.01.94 Patentblatt 94/02**

(84) Benannte Vertragsstaaten:
**DE NL**

(56) Entgegenhaltungen:
EP-A- 0 254 103
DE-A- 2 415 616
US-A- 2 267 752
US-A- 4 032 743
US-A- 4 652 412

LASER FOCUS, Nr. 5, Mai 1987, Newtonville;
Th.A. ZNOTINS et al., Seiten, 54-70&NUM;

FERTIGUNG, Nr. 2, 1972, Bern; G. HERZIGER,
Seiten 87-92&NUM;

PATENT ABSTRACTS OF JAPAN, Band 9, Nr.
226 (M-412)(1949), 12 September 1985&NUM;

RÖMPP's CHEMIE LEXIKON, Band 2, Cm-G,
1990; Stichwort "Excimer-Laser", Seiten
1278-79&NUM;

(73) Patentinhaber: **Akzo N.V.**
**Postbus 9300**
**Velperweg 76**
**NL-6800 SB Arnhem(NL)**

(72) Erfinder: **Flottmann, Thomas, Dr. Dipl.-Phys.**
**Hirschbachweg 3**
**D-6112 Gross-Zimmern(DE)**
Erfinder: **Tretzel, Joachim, Dr. Dipl.-Chem.**
**Bessenbacher Weg 45**
**D-8750 Aschaffenburg(DE)**

(74) Vertreter: **Fett, Günter**
**Akzo Patente GmbH,**
**Postfach 10 01 49**
**D-42097 Wuppertal (DE)**

EP 0 325 752 B1

## Beschreibung

Die vorliegende Erfindung betrifft eine Flachmembran aus Folien von organischen Polymeren, Glas oder keramischen Werkstoffen, mit trichterförmig sich verjüngenden Poren definierter Porengröße, mit einer Streuung von weniger als 10 % und regelmäßiger Anordnung der Poren in nebeneinanderliegenden Reihen und Verfahren zur Herstellung solcher Flachmembranen aus Folien von organischen Polymeren, Glas oder keramischen Werkstoffen durch Erosion der Poren durch Verwendung eines oder mehrerer gepulster Laserstrahlen und unter fortlaufenden Transport der Folie an dem oder den Lasern vorbei.

Mikro- und Ultrafiltrationsmembranen mit einheitlichem Porendurchmesser besitzen einige Vorteile gegenüber herkömmlichen Membranen mit einer breiten Verteilung von Porendurchmessern. Stoffe mit einem Durchmesser, der größer als derjenige der Poren ist, werden mit Sicherheit zurückgehalten, während für Stoffe geringerer Größe ein gleichmäßiger, schneller Durchlaß gewährleistet wird. Die definierte Porengröße ermöglicht z.B. interessante Anwendungen in der biomedizinischen und biotechnologischen Technik.
Bei der Dialyse muß die Lochgröße für den Durchgang der Solute (z.B. Elektrolyte, Glukose, Harnstoff, Kreatin, Barbiturate) ausreichend sein, während Kolloide und korpuskulare Bestandteile (Eiweiß, Fette, Blutzellen, Bakterien und Viren) zurückgehalten werden sollen. Hierfür muß die Trenngrenze etwa beim Molekulargewicht 60 000 liegen. Mit definierten Porendurchmessern kann eine wesentliche Verbesserung von heutigen Dialysemembranen erzielt werden. Im Porenbereich 50 - 4000 nm ist die Trennung von spezifischen Proteinen möglich. Noch größere Poren mit $\mu$m-Abmessungen liegen im Bereich der Größe von biologischen Zellen. Entsprechende Membranen könnten daher in der Krebstherapie eingesetzt werden. Der Porenbereich von 50 - 10 000 nm ist außerdem zur Trennung von Mikroorganismen (Bakterien und Viren) geeignet.
Auch in der Biotechnologie eröffnen sich viele Anwendungsmöglichkeiten für Mikro- und Ultrafiltrationsmembranen mit definierter Porengröße. Hier kommt es darauf an, bestimmte biologisch aktive Substanzen an der Membranoberfläche haften zu lassen, während die Transportflüssigkeit mit den erzeugten Produkten gut passieren können muß. Ähnliche Porengrößen wie für die oben beschriebenen biomedizinischen Anwendungen kommen dafür in Betracht.

Bisherige Verfahren zur Herstellung von Membranen mit definierter Porengröße beinhalten das mechanische Stanzen von Folien, den Ionenbeschuß in Verbindung mit chemischem Ätzen und das Bohren mit Lasern.

Der allgemeine Mechanismus der Photoablation mittels gepulster Excimer-Laserstrahlen wird beispielsweise in Laser Focus, 23. Mai 1987 No. 5, auf den Seiten 54 bis 70 beschrieben. Auch ist hier die Möglichkeit der Maskenabbildung zur gleichzeitigen Erzeugung von vielen, nebeneinanderliegenden Löchern aufgeführt.

Die Prägewerkzeuge für das mechanische Stanzen werden durch Oberflächenrelief-Technik erstellt. Dabei wird photoempfindliches Material (Photoresist) mit Laserlicht belichtet, um die gewünschten feinen Muster auf der Oberfläche abzubilden. Nach der chemischen Entwicklung stehen diese als Oberflächenstrukturen im Photoresist zur Verfügung. Nun muß noch mit Elektroformtechnik ein metallenes Abbild der Photoresiststrukturen geschaffen werden. Ein derartiges Verfahren ist in der US-A-4 652 412 beschrieben.
In einer anderen Technik werden Polymerfolien mit Ionen-strahlen hoher Energie durchschossen. Die Ionen hinterlassen Kanäle in der Folie, die nachher chemisch herausgeätzt werden. Die resultierende Lochverteilung ist zwar einheitlich im Durchmesser, aber statistisch auf der Fläche verteilt. Überlappende Spuren müssen überdies nachträglich unter dem Mikroskop aussortiert werden. Hierzu kann auf die US-A-3 303 085 und die US-A-3 612 871 verwiesen werden.

Schließlich können einzelne Löcher auch direkt mit einem Laser in Folien aus verschiedenen Materialien (Metall, Polymer, Keramik, etc.) gebrannt werden. Verwendet wird im allgemeinen infrarotes Licht von CO2- oder Nd-YAG-Lasern. Die Wirkung beruht auf der Hitzeentwicklung des fokussierten Lichts, die an der Auftreffstelle das Material verdampfen läßt. Durch die thermische Wechselwirkung werden allerdings auch die stehenbleibenden Lochränder geschädigt, da das Material dort teilweise aufgeschmolzen wird. Lochdurchmesser unter 1 um wurden auf diese Weise nicht erzielt. Damit große Folienstücke mit hoher Geschwindigkeit flächendeckend durchlöchert werden können, muß bei feststehenden Laserköpfen die Folie durch einen komplizierten Mechanismus unter dem Laserstrahl durchbewegt werden und der strahl, korreliert mit einer entsprechenden Elektronik, gepulst werden (vgl. beispielsweise US-A-4 032 743).

Aufgabe der vorliegenden Erfindung war es, eine Flachmembran aus Folien von organischen Polymeren, Glas oder keramischen Werkstoffen herzustellen, wobei eine große Zahl von in Lochfeldern angeordneten, gleichen Poren gleichzeitig erzeugt wird. Die Herstellung soll dabei bei möglichst hoher Flächendeckung in relativ kurzer Zeit erfolgen. Außerdem sollen Flachmembranen zur Verfügung gestellt werden, die sich durch hohe Filtrationsleistung bei scharfer Trenngrenze auszeichnen.

Gelöst wird diese Aufgabe durch eine Flachmembran aus Folien von organischen Polymeren, Glas oder keramischen Werkstoffen, mit trichterförmig sich verjüngenden Poren definierter Porengröße, mit einer Streuung von weniger als 10 %, auf Seite des kleineren Porendurchmessers flächig vollständig eben und Anordnung der Poren in einem Muster nebeneinanderliegender Reihen, dadurch gekennzeichnet, daß die mittleren Porendurchmesser 0,05 bis 10 $\mu$m betragen und jeweils ein Muster in einer regelmäßig begrenzten Fläche regelmäßig angeordnet ist und auf der Seite der größeren Porenöffnungen zwischen den einzelnen Poren verbleibende Stege unterschiedliche Höhe in der Ebene parallel zur Dickenausdehnung des Folienmaterials aufweisen.

Die Flachmembran kann bevorzugt so ausgebildet werden, daß die Stege, die benachbarte Poren in einer Richtung verbinden, kleinere Höhe in der Ebene parallel zur Dickenausdehnung des Folienmaterials aufweisen als die Stege in der dazu senkrecht verlaufenden Richtung.

Organische Polymere, die für die Erfindung infrage kommen, sind beispielsweise Polyolefine, Polycarbonate, Polyester, Polyimide, PMMA, Polyformaldehyde, Polytetrafluorkohlenwasserstoffe, Cellulose, Silikonkautschuk.
Als Glas kommen für die Erfindung alle üblichen Glassorten infrage.

Keramische Materialien, die für die Erfindung eingesetzt werden können, sind oxidische und nichtoxidische Keramiken, beispielsweise $Al_2O_3$, $Si_3N_4$.

Die regelmäßig begrenzte Fläche kann jeder geometrisch definierten Fläche entsprechen. Aus Zweckmäßigkeitsgründen ist es bevorzugt, die Fläche als Quadrat, Rechteck oder Kreis auszubilden, insbesondere auch deshalb, weil die Ausführungen verfahrenstechnisch sich besonders einfach lösen lassen.

Die besondere Anordnung der Stege eröffnet besondere Möglichkeiten bei der Membranfiltration, je nachdem, ob von der engen oder weiten Trichterseite der Poren die Membran beaufschlagt wird.

Für die Tiefenfiltration bei relativ geringem Feststoffgehalt erfolgt diese dadurch, daß die Seite der Membran mit der weiteren Trichteröffnung beaufschlagt wird und die Stege mit geringerer Höhe ein Unterspülen von zurückgehaltenen Teilchen ermöglichen.

Bei höheren Feststoffgehalten wird die Membran auf der Seite mit der engeren Trichteröffnung beaufschlagt und die herausstehenden Stege auf der Gegenseite wirken als Abtropfkanten für das Filtrat.

Zur Erhöhung der mechanischen Stabilität ist in einer besonderen Ausführungsform der Erfindung die Flachmembran auf ein weitporiges Stützmaterial aufgebracht. Dieses kann beispielsweise ein weitporiges Filtermaterial aus einem organischen Polymeren sein. Es kann aber auch eine dünne Metallfolie sein, die vor oder nach der Bestrahlung mit dem Laser mittels bekannter Techniken mit weitporigen Öffnungen, beispielsweise auf galvanischem Wege versehen ist. Bekannte Kombinationen von dünnen organischen Polymerfolien und dünnen Metallfolien sind aus der DE-A-36 20 601 bekannt.

Gegenstand der Erfindung ist auch ein Verfahren zur Herstellung von Flachmembranen gemäß Anspruch 2 durch Erosion der Poren durch Verwendung eines oder mehrerer Excimer-Laserstrahlen und unter fortlaufendem Transport der Folie an dem oder den Lasern vorbei, welches durch die in Anspruch 7 angegebenen Merkmale gekennzeichnet ist.

Ebenfalls Gegenstand der Erfindung ist ein Verfahren zur Herstellung von Flachmembranen gemäß Anspruch 1 durch Erosion der Poren durch Verwendung von mindestens 2 Excimer-Laserstrahlen und unter fortlaufendem Transport der Folie an den Lasern vorbei, welches durch die in Anspruch 8 angegebenen Merkmale gekennzeichnet ist.

Erfindungsgemäß ist es gelungen, mit dem gepulster Excimer-Laser Membranen mit definierter Porengröße herzustellen.

Erfindungsgemäß wird in einem Verfahrensschritt jeweils ein ganzes Feld von mehreren tausend Löchern gleichzeitig gebohrt. Ein Laserstrahl mit regelmäßig begrenzter Strahlfläche wird in dieser Fläche intensitätsmoduliert, wobei die Stellen mit hoher Intensität den Löchern entsprechen und die Stellen mit geringer Intensität den stehenbleibenden Stegen zwischen den Löchern entsprechen. Zu diesem Zweck wird entweder das Raster einer metallischen Lochmaske mittels eines Linsensystems optisch verkleinert mit dem Laser auf die Substratfolie abgebildet. Oder es wird die Kohärenz von zwei Laserteilstrahlen ausgenutzt, um durch Überlagerung Interferenzstreifen zu erzeugen. Bei Überkreuzen von senkrecht zueinander stehenden Interferenzstreifen entsteht das gewünschte Lochmuster. Die Substratfolie wird bei beiden Verfahrensvarianten mit langsamer Geschwindigkeit unter dem feststehenden Laserkopf fortlaufend transportiert.

Die einzelnen Lochfelder sind durch größere Abstände auf der Folie voneinander getrennt. Dadurch wird die mechanische Stabilität der Membrane bei gleichzeitiger hoher Flächendeckung gesteigert. Der erreichbare maximale relative Flächenanteil, der von der Lochfläche eingenommen wird, beträgt etwa 50 %, bezogen auf die gesamte Membran.
Der Materialabtrag erfolgt durch photochemisches Ätzen mit gepulsten Excimer-Lasern. Dabei werden die Molekülbindungen des betreffenden Materials direkt durch Photonenabsorption gebrochen. Voraussetzung ist, daß das Substratmaterial bei der Laserwellenlänge genügend stark absorbiert. Die Laserpulse sind so kurz (1-1000 ns), daß das zersetzte Material explosionsartig die Oberfläche verläßt. Die thermische Wechselwirkung der Laserstrahlung mit dem Membranmaterial ist dabei so gering, daß benachbartes, unbestrahltes Material nicht thermisch geschädigt wird. Das Resultat sind scharfe und glatte Lochränder, die aus unzersetztem Ausgangsmaterial bestehen. Der Materialabtrag pro Laserpuls ist durch die Pulsenergie abstufbar und beträgt minimal etwa 100 nm (materialabhängig).

Bedingt durch Lichtbeugungseffekte an Materialkanten verjüngen sich die Lochinnenabmessungen mit zunehmender Eindringtiefe der Strahlung; es bilden sich trichterförmige Strukturen aus.Im Falle der optischen Abbildung einer Lochmaske wird durch Näherrücken der Löcher auf der Maske in einer bestimmten Richtung erreicht, daß auf der erzeugten Membran die Stege zwischen den Poren in dieser Richtung bezüglich der Folienoberfläche abgesenkt werden.

Im Falle der Methode der gekreuzten Interferenzstreifen wird durch die aufeinanderfolgende abgestufte Materialabtragung in zueinander senkrechten streifen erreicht, daß die Stege eine unterschiedliche Höhe in der Ebene parallel zur Dickenausdehnung des Folienmaterials aufweisen.

Der photochemische Materialabtrag setzt erst nach Über-schreiten einer gewissen Schwellenintensität pro Puls ein. Diese Schwellenintensität ist material- und wellenlängenabhängig und bestimmt die minimal abzutragende Schichtdicke. Nach Überschreiten der Schwellenintensität nimmt mit zunehmender Pulsenergie die abgetragene Schichtdicke pro Puls nach einem nichtlinearen Zusammenhang zu. Insgesamt berechnet sich die abgetragene Schichtdicke D an den beleuchteten Substratstellen nach:

$$D = n.a(I, \lambda, f, \alpha)$$

n = Zahl der Pulse
a = abgetragene Schichtdicke/Puls
I = Laserintensität
f = Laserfrequenz
$\alpha$ = Absorptionskoeff. des Materials bei der Laserwellenlänge $\lambda$

Die Frequenzabhängigkeit rührt Von der lichtabschirmenden Wirkung der herausfliegenden Materialfragmente über der substratoberfläche her.

Der minimal erzeugbare Porendurchmesser ist abhängig von der verwendeten Laserwellenlänge $\lambda$. Bei der Methode der optischen Abbildung einer Lochmaske wird die Auflösung d durch die Beugungsbegrenzung gegeben:

$$d = \lambda / 2.N$$

N = numerische Apertur der Abb.-optik

Bei der Methode der Interferenzstreifen ist die Auflösung gegeben durch:

$$d = \lambda / 2.\sin\vartheta$$

$\vartheta$ = Überlagerungswinkel der Teilstrahlen

Bei Verwendung der Interferenzmethode muß außerdem die Kohärenzlänge der verwendeten Laserstrahlung groß sein gegenüber den Abmessungen eines Lochfeldes.

Figurenbeschreibung

Figur 1 zeigt schematisch den optischen Aufbau für die Erosion einer Folie, bei der die Intensitätsmodulation durch eine rechteckige Lochmaske bewirkt wird.

Figur 2 zeigt schematisch eine Anordnung von mehreren Lasern, die gleichzeitig räumlich versetzt auf eine jeweils regelmäßig begrenzte Fläche der Folie wirken.

Figur 3a zeigt eine rasterelektronenmikroskopische Aufnahme von einem Ausschnitt aus einem Porenmuster der erfindungsgemäßen Membran.

Figur 3b ist eine rasterelektronenmikroskopische Aufnahme einer einzelnen Pore. Bei dieser ist deutlich die geringe Höhe der quer verlaufenden Stege erkennbar.

Figur 4 zeigt schematisch den optischen Aufbau für die Erosion der Folie, bei der die Intensitätsmodulation durch streifenförmige Interferenz erzeugt wird.

Figur 5 zeigt den Ausschnitt aus einem typischen streifenförmigen Interferenzmuster (stark vergrößert).

Figur 6a zeigt schematisch das bei der Überkreuzung von streifenförmigen Interferenzen entstehende Lochmuster und die Stege mit unterschiedlicher Höhe.

Figur 6b zeigt schematisch einen Ausschnitt aus dem räumlichen Abbild der Oberflächenstruktur der durch überkreuzte Interferenzen erzeugten Flachmembran. Hervorgehoben sind die Stege mit unterschiedlicher Höhe.

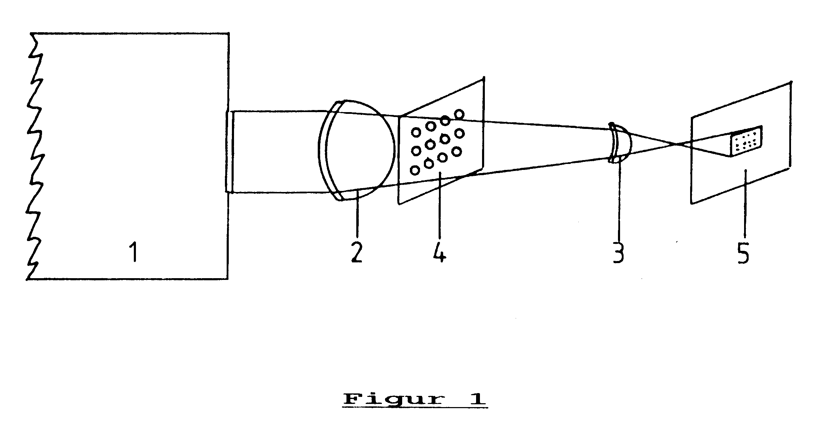

In Figur 1 ist (1) der verwendete gepulste Excimerlaser, dessen Strahl durch ein optisches Linsensystem (2,3), in welches die Lochmaske (4) eingebracht ist, auf die zu behandelnde Folie (5) gerichtet ist.

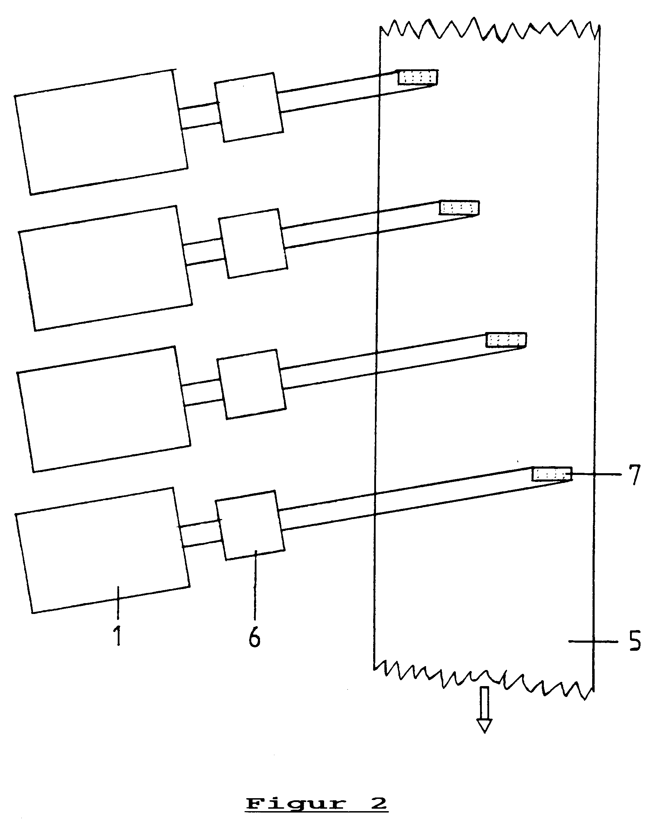

In Figur 2 sind die verwendeten Laser (1) räumlich versetzt angeordnet und erzeugen, mittels einer die Strahlintensität modulierenden Vorrichtung (6), auf der Folie (5) ein Porenmuster (7) in einer regelmäßig begrenzten Fläche.

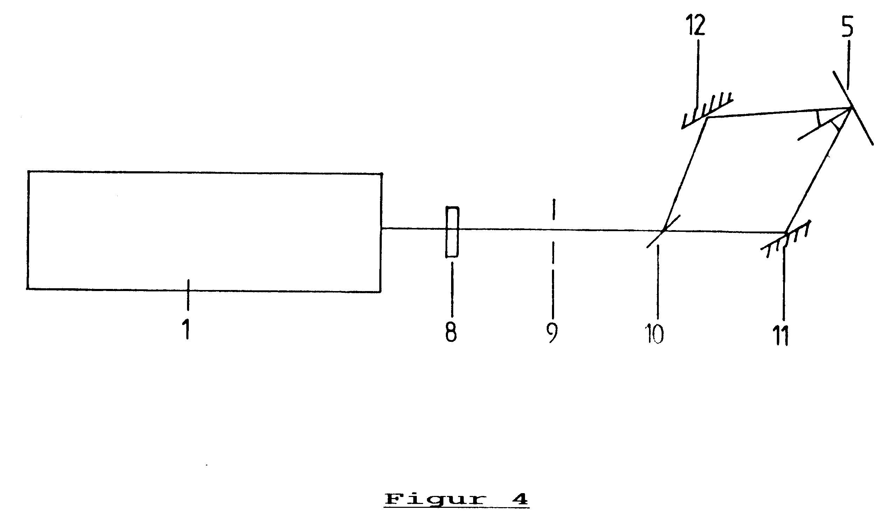

In Figur 4 ist ein Laser (1), ein Filter (8) und eine Blende (9) dargestellt, durch die der Laserstrahl auf einen halbdurchlässigen Spiegel (10) sowie die Spiegel (11) und (12) gerichtet wird. Je nach dem Winkel der Überlagerung der Laserstrahlen werden Interferenzstreifen mit unterschiedlicher Periodenlänge auf der Folie (5) erzeugt.

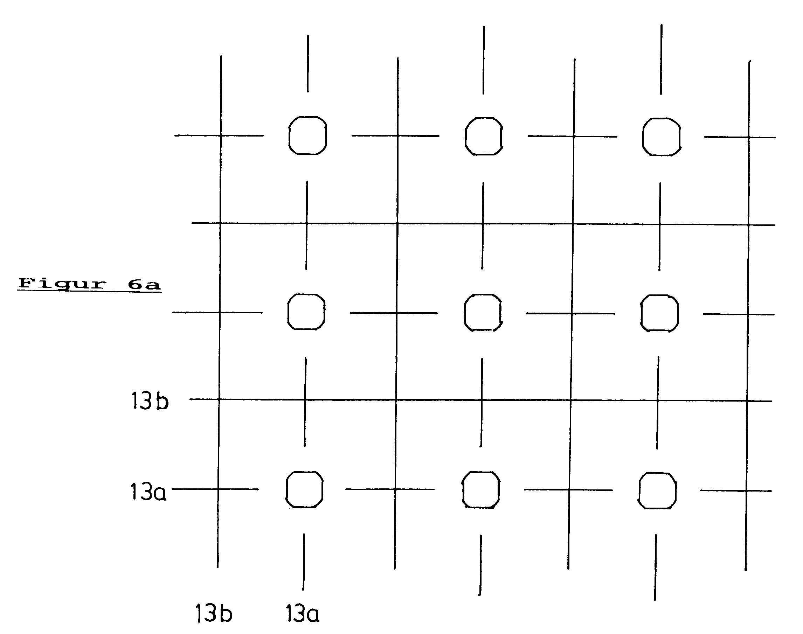

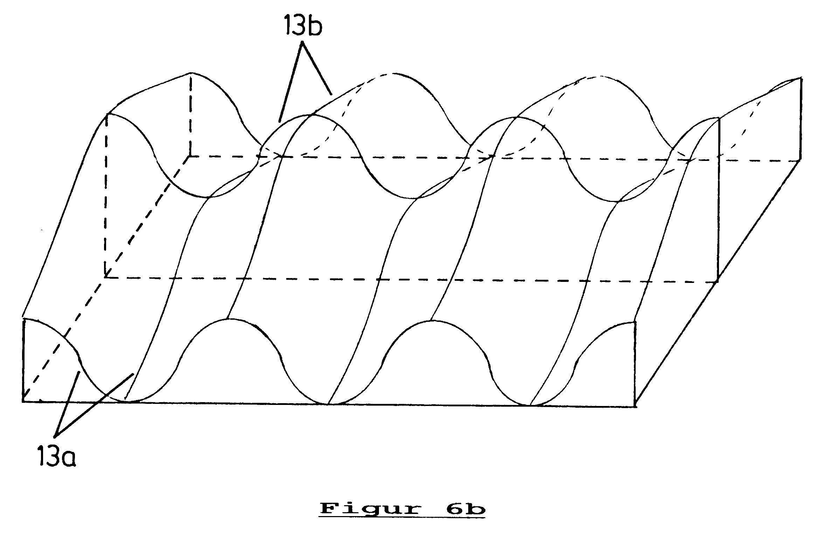

In den Figuren 6a und 6b sind niedrig liegende Stege mit (13a) und hoch liegende Stege mit (13b) bezeichnet.

## 1. Ausführungsbeispiel

Eine Nickel-Lochmaske (Lochdurchmesser 100 μm) wird mit 308 nm Strahlung eines XeCl-Excimerlasers durch ein optisches Linsensystem im Maßstab 10 : 1 auf eine 10 μm dicke und 10 cm breite Polyimidfolie abgebildet (siehe Fig. 1). Bei einer Bestrahlungsintensität von $1 J/cm^2$ pro Puls auf der Folie wird ein Lochmuster mit 100 Pulsen gebohrt. Die Pulsfrequenz des Lasers beträgt 200 Hz, jeder Puls ist etwa 20 ns lang.

Die erzeugten Lochfelder sind 2 x 1 cm groß mit Einzellöchern von 10 um Durchmesser.

Die Polymerfolie wird auf glatter Unterlage, bei konstantem Abstand zum Laserkopf, schubweise mit 1 cm/s vorwärts transportiert.

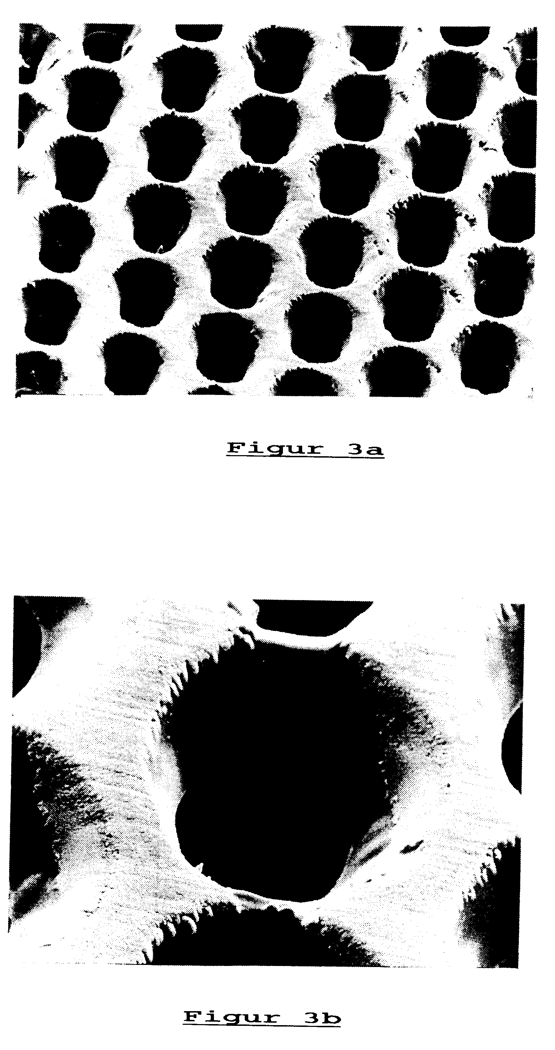

Um die gesamte Breite der Folie abzudecken, werden 5 Laser in identischer Weise nebeneinander betrieben (siehe Fig. 2). Fig. 3 zeigt Ausschnitte aus dem erzeugten Porenmuster.

## 2. Ausführungsbeispiel

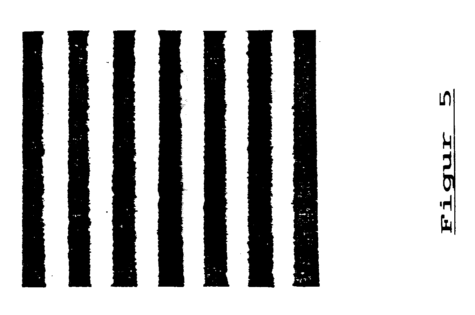

Der Strahl eines schmalbandigen KrF-Excimerlasers (λ = 248 nm, Bandbreite = 3 GHz) wird in zwei Teilstrahlen aufgeteilt und auf der Probenfolie aus Polyimid unter einem Winkel von 7° zur Überlagerung gebracht (siehe Fig. 4). Die entstehenden Interferenzstreifen haben eine Periode von ca. 1 μm (siehe Fig. 5). Bei einer Bestrahlungsintensität von $1 J/cm^2$ pro Puls wird mit einem 20 ns langen Puls jeweils ein 1 x 1 cm großes Oberflächenrelief aus der Folie herausgeätzt. Der Materialabtrag beträgt 0.5 μm. In einer anderen Bestrahlungsposition wird an der gleichen Stelle der Folie mit einem weiteren Puls eines anderen Lasers ein zweites Oberflächenrelief, dessen Streifen senkrecht zum ersten verlaufen, aufgeprägt. An den Überkreuzungsstellen resultiert ein 1 x 1 cm großes Feld von quadratischen Materialaushebungen von 1 μm Tiefe und 0.5 x 0.5 μm Breite am Lochgrund (siehe Fig. 6).

Die Membranfolie sollte zweckmäßig zur Wahrung ihrer mechanischen Stabilität ein zusammengesetztes System sein. Sie besteht aus einem Träger mit relativ großen Poren (z.B. gelöcherte Metallfolie mit Löchern >100 μm), auf die eine 1 μm dünne Polyimidschicht aufgebracht ist. Nach obigem Verfahren entstehen somit 0.5 x 0.5 μm große Durchlässe in der dünnen Polyimidschicht.

Zur kontinuierlichen Verarbeitung wird die kombinierte Folie mit 2 cm/0.1 s auf glatter Unterlage bei konstantem Abstand zum Laserkopf vorwärts transportiert. Die Pulsfrequenz der Laser ist dabei 20 Hz. Zur Bestrahlung der gesamten Folienbreite werden wiederum mehrere Laser parallel betrieben.

## Patentansprüche

1. Flachmembran aus Folien (5) von organischen Polymeren, Glas oder keramischen Werkstoffen, mit trichterförmig sich verjüngenden Poren definierter Porengröße, mit einer Streuung von weniger als 10 %, auf Seite des kleineren Porendurchmessers flächig eben und regelmäßiger Anordnung der Poren in nebeneinander liegenden Reihen, dadurch gekennzeichnet, daß die mittleren Porendurchmesser 0,05 bis 10 μm betragen, daß die regelmäßig nebeneinander liegenden Reihen von Poren als sich wiederholende, regelmäßig begrenzte Lochfelder (7) auf der Folie (5) angeordnet sind und daß auf der Seite der größeren Porenöffnungen zwischen den einzelnen Poren verbleibende Stege unterschiedliche Höhe in der Ebene parallel zur Dickenausdehnung des Folienmaterials aufweisen (5).

2. Flachmembran nach Anspruch 1, dadurch gekennzeichnet, daß die Stege, die benachbarte Poren in einer Richtung verbinden, kleinere Höhe in der Ebene parallel zur Dickenausdehnung des Folienmaterials aufweisen als die Stege in der dazu senkrecht verlaufenden Richtung (Fig. 3a, 3b).

3. Flachmembran nach Anspruch 1 oder 2, dadurch gekennzeichnet, daß die regelmäßig begrenzte Fläche ein Quadrat ist.

4. Flachmembran nach Anspruch 1 oder 2, dadurch gekennzeichnet, daß die regelmäßig begrenzte Fläche ein Rechteck (7) ist.

**5.** Flachmembran nach Anspruch 1 oder 2, dadurch gekennzeichnet, daß die regelmäßig begrenzte Fläche ein Kreis ist.

**6.** Flachmembran nach einem oder mehreren der Ansprüche 1 bis 5, dadurch gekennzeichnet, daß die Flachmembran auf ein weitporiges Stützmaterial aufgebracht ist.

**7.** Verfahren zur Herstellung von Flachmembranen gemäß Anspruch 2 durch Erosion der Poren durch Verwendung eines oder mehrerer gepulster Laserstrahlen und unter fortlaufendem Transport der Folie (5) an dem oder den Lasern (1) vorbei, dadurch gekennzeichnet, daß der oder die Excimer-Laserstrahlen in ihren regelmäßig begrenzten Strahlflächen durch Abbildung einer Lochmaske (4) intensitätsmoduliert werden, wobei zur Erzielung der ungleich hohen Stege zwischen den Poren (Fig.2) die Löcher auf der Lochmaske (4) in einer Richtung näher beieinander liegen als in der Querrichtung, und daß der oder die Excimer-Laserstrahlen unter gleichzeitiger Erosion aller Poren eines Lochfeldes (7) mit einer Pulslänge von 1 bis 1000 Nanosekunden auf die Folie (5) gepulst werden.

**8.** Verfahren zur Herstellung von Flachmembranen gemäß Anspruch 1 durch Erosion der Poren durch Verwendung von mindestens zwei gepulsten Laserstrahlen und unter fortlaufendem Transport der Folie (5) an dem oder den Lasern (1) vorbei, dadurch gekennzeichnet, daß zwei kohärente Excimer-Laserstrahlen so zur Interferenz gebracht werden, daß auf der Folie (5) in einer regelmäßig begrenzten Fläche eine streifenförmige Intensitätsmodulation (Fig.5) entsteht, daß die Poren der Membran gemäß Anspruch 1 durch zweistufigen Materialabtrag in zueinander senkrechten, sich uberkreuzenden Interferenzstreifen erodiert werden, und daß der oder die Excimer-Laserstrahlen unter gleichzeitiger Erosion aller Poren eines Lochfeldes (7) mit einer Pulslänge von 1 bis 1000 Nanosekunden auf die Folie (5) gepulst werden.

**9.** Verfahren nach Anspruch 7 oder 8, dadurch gekennzeichnet, daß die Folie vor der Bestrahlung mit Lasern auf ein weitporiges Stützsystem aufgebracht ist.

**10.** Verfahren nach einem oder mehreren der Ansprüche 7 bis 9, dadurch gekennzeichnet, daß als Folie eine Verbundfolie aus organischen Polymeren, Glas oder keramischen Werkstoffen mit einer dünnen Metallfolie eingesetzt und die Metallfolie vor oder nach dem Bestrahlen mit weitporigen Öffnungen versehen wird.

**Claims**

**1.** Flat membrane made from films (5) of organic polymers, glass or ceramic materials with tapering, funnel-shaped pores of a defined pore size with a dispersion of less than 10%, two-dimensionally level on the side of the smaller pore diameter and with a regular arrangement of the pores in adjacent rows, characterised in that the average pore diameters are 0.05 to 10 $\mu$m, in that the regular adjacent rows of pores are arranged as repeating regularly delimited perforation areas (7) on the film (5) and in that, on the side of the larger pore orifices, the crosspieces remaining between the individual pores are of a different height in the plane parallel to the thickness of the film material (5).

**2.** Flat membrane according to claim 1, characterised in that the crosspieces linking neighbouring pores in one direction are of a lower height in the plane parallel to the thickness of the film material than the crosspieces in the direction perpendicular to them (fig. 3a, 3b).

**3.** Flat membrane according to claim 1 or 2, characterized in that the regularly delimited area is a square.

**4.** Flat membrane according to claim 1 or 2, characterized in that the regularly delimited area is a rectangle (7).

**5.** Flat membrane according to claim 1 or 2, characterised in that the regularly delimited area is a circle.

**6.** Flat membrane according to one or more of claims 1 to 5, characterised in that the flat membrane is applied to a supporting material with wide pores.

**7.** Process for the production of flat membranes according to claim 2 by erosion of the pores by using one or more pulsed laser beams while the film (5) is continuously conveyed past the laser or lasers (1), characterised in that the excimer laser beam or beams are modulated in intensity in their regularly delimited irradiation areas by projecting a perforation mask (4), wherein, in order to achieve the crosspieces of uneven height between the pores (fig. 2), the perforations in the perforation mask are closer together in one direction than in the transverse direction, and in that the excimer laser beam or beams are pulsed onto the film (5) with a pulse length of 1 to 1000 nanoseconds, all the pores in a perforation area (7) being simultaneously eroded.

8.  Process for the production of flat membranes according to claim 1 by erosion of the pores by using at least two pulsed laser beams while the film (5) is continuously conveyed past the laser or lasers (1), characterised in that two coherent excimer laser beams are caused to interfere in such a manner that there are produced on the film (5) within a regularly delimited area, bands of a modulated intensity (fig. 5), in that the pores of the membrane according to claim 1 are eroded by two-stage removal of material with interference bands which cross each other at right angles and in that the excimer laser beam or beams are pulsed onto the film (5) with a pulse length of 1 to 1000 nanoseconds, all the pores in a perforation area (7) being simultaneously eroded.

9.  Process according to claim 7 or 8, characterised in that the film is applied to a supporting system with wide pores before laser irradiation.

10. Process according to one or more of claims 7 to 9, characterised in that a composite film made from organic polymers, glass or ceramic materials with a thin metal film is used as the film and the metal film is provided with wide pores before or after irradiation.

**Revendications**

1.  Membrane plane formée de feuilles (5) de polymères organiques, de verre ou de matériaux céramiques, comportant des pores de taille définie qui se rétrécissent en entonnoir, avec une dispersion inférieure à 10%, de configuration plane du côté du petit diamètre des pores et avec une disposition régulière des pores en rangées juxtaposées, caractérisée par le fait que le diamètre moyen des pores est compris entre 0,05 et 10 $\mu$m, par le fait que les rangées de pores disposées régulièrement les unes à côté des autres sont agencées sur la feuille (5) sous forme de zones de trous (7) répétitives à contour régulier et par le fait que, du côté des plus grandes ouvertures des pores, les cordons qui subsistent entre les différents pores présentent une hauteur variable dans le plan parallèle à l'épaisseur du produit en feuille (5).

2.  Membrane plane selon la revendication 1, caractérisée par le fait que les cordons qui relient dans une direction des pores voisins, dans le plan parallèle à l'épaisseur du matériau en feuille, ont une hauteur plus faible que les cordons qui s'étendent dans la direction perpendiculaire.

3.  Membrane plane selon la revendication 1 ou 2, caractérisée par le fait que la surface à contour régulier est un carré.

4.  Membrane plane selon la revendication 1 ou 2, caractérisée par le fait que la surface à contour régulier est un rectangle (7).

5.  Membrane plane selon la revendication 1 ou 2, caractérisée par le fait que la surface à contour régulier est un cercle.

6.  Membrane plane selon une plusieurs des revendications 1 à 5, caractérisée par le fait que la membrane plane est appliquée sur un matériau support à larges pores.

7.  Procédé de fabrication de membranes planes conformes à la revendication 2 par érosion des pores, dans lequel on utilise un ou plusieurs rayons laser pulsés et on transporte en continu la feuille (5) devant le ou les lasers (1), procédé caractérisé par le fait que l'on module en intensité le ou les rayons de lasers à excimères à l'intérieur de leur surface de rayon à contour régulier par reproduction d'un masque perforé (4), les trous du masque perforé (4) étant plus proches les uns des autres dans une direction que dans la direction perpendiculaire à celle-ci dans le but d'obtenir les cordons de hauteur différente entre les pores (Figure 2), et par le fait que pour l'érosion simultanée de tous les pores d'une zone de trous (7), on fait fonctionner le ou les lasers à excimères avec une durée d'impulsion de 1 à 1000 nanosecondes.

8.  Procédé de fabrication de membranes planes conformes à la revendication 1 par érosion des pores, dans lequel on utilise au moins deux rayons laser pulsés et on transporte en continu la feuilles (5) devant le ou les lasers (1), procédé caractérisé par le fait que l'on amène en interférence deux rayons cohérents de laser à excimères, par le fait qu'il se forme sur la feuille (5), dans une surface à contour régulier, une modulation d'intensité en bande (figure 5), par le fait que l'on érode les pores de la membrane conforme à la revendication en procédant à un enlèvement de matière en deux étapes dans des bandes d'interférence croisées perpendiculaires et par le fait que pour l'érosion simultanée de tous les pores d'une zone de trous (7), on fait fonctionner le ou les lasers à excimères avec une durée d'impulsion de 1 à 1000 nanosecondes.

9. Procédé selon la revendication 7 ou 8, caractérisé par le fait que, avant l'irradiation au moyen de lasers, on place la feuille sur un support à larges pores.

10. Procédé selon l'une ou plusieurs des revendications 7 à 9, caractérisé par le fait que l'on utilise comme feuille une feuille composite de polymères organiques, de verte ou de matériaux céramiques avec une fine feuille métallique et on réalise des ouvertures à larges pores dans la feuille métallique avant ou après l'irradiation.

**Figur 1**

**Figur 2**

**Figur 3a**

**Figur 3b**

Figur 4

Figur 5

**Figur 6a**

13b

13a

13b   13a

EP 0 325 752 B1

**Figur 6b**